# EUROPEAN PATENT APPLICATION

(11) **EP 2 476 900 A1**
(43) Date of publication of application: **18.07.2012**
(21) Application number: 11151237.2
(22) Date of filing: 18.01.2011
(51) Int. Cl.: F03D 7/02, F03D 9/00

(54) **Wind turbine**

(71) Applicant: Siemens Aktiengesellschaft, 80333 München (DE)
(72) Inventor: Hoegh, Gustav, 7400, Herning (DK)

(57) **Abstract**

A wind turbine (1, 16), comprising a rotor (2), a permanent magnet generator (4) and a generator converter (5), whereby an electric or electronic switch (14), which is arranged between the permanent magnet generator (4) and the generator converter (5), is provided for selectively connecting the permanent magnet generator (4) to at least one braking resistor (15, 19) .

## Description

The present invention relates to a wind turbine, comprising a rotor, a permanent magnet generator and a generator converter.

Wind turbines are provided with a rotor which is connected to a permanent magnet generator producing electricity during movement of a rotor relative to a stator of the permanent magnet generator. The stator comprises a number of coils, the rotor comprises a number of permanent magnets so that an electric voltage is induced when the rotor is turned.

The permanent magnet generator is connected to a generator converter which transforms the alternating current which is produced by the permanent magnet generator into direct current, the generator converter is preferably connected to a grid converter which transforms the direct current into alternating current with the correct voltage and frequency which is required by a power grid. The power produced by a wind turbine is normally going into the grid. However, this is not possible during a grid drop. In case of a grid drop the turbine will reduce the power production to zero. As a consequence the generator torque drops dramatically. In this case the aerodynamic torque will now be larger than the generator torque and the rotor will accelerate. Hereby the speed of the rotor is no longer controlled and could cause the rotor to go into overspeed. To prevent an uncontrolled rotation it is desired to apply braking to keep control of the wind turbine and to decelerate the rotor.

In conventional wind turbines air brakes are used, whereby the blades are pitched to reduce the aerodynamic moment • Another possibility to apply braking is to use a mechanical brake, e. g. a brake disc so that the reduced generator torque is compensated for.

In conventional wind turbines braking resistors in a DC-link are used. This means that power resistors are positioned in the DC-link between generator converter and grid converter in order to load the generator and thereby braking the turbine. However, braking resistors in the DC-link require that the generator converter is running. If the generator converter fails it is no longer possible to brake the rotor of the wind turbine by power resistors in the DC-link.

It is therefore an object of the present invention to provide a wind turbine, whereby braking of the rotor is possible even when the generator converter is not running.

According to the present invention this object is achieved in the above defined wind turbine in that an electric or electronic switch, which is arranged between the permanent magnet generator and the generator converter, is provided for selectively connecting the permanent magnet generator to at least one braking resistor.

The invention is based on the idea that the dependency of the running generator converter can be eliminated when the braking resistors are placed directly in connection with the permanent magnet generator. This is possible because the permanent magnet generator does not require magnetisation current or other active control to produce power. Simply cutting in power resistors directly on the phases of the permanent magnet generator will provide load on the generator and thereby brake the rotor.

In the inventive wind turbine it is preferred that the electronic switch is controlled by a controller. The controller can e. g. comprise a microprocessor or a similar control device.

According to a further development of the inventive wind turbine the duty cycle of the electronic switch can be controlled by the controller. The duty cycle is the fraction of time that the electronic switch is in an active state. Accordingly it is intended that the electronic switch is switched on and off according to a certain duty cycle so that braking of the rotor is effected intermittently.

In the inventive wind turbine it is preferred that a control algorithm is implemented in the controller, monitoring grid status and/or rotor speed and/or temperature of the resistors.

Accordingly the control algorithm can take into account different status information from the grid and components of the inventive wind turbine. The grid status can best be monitored by monitoring the grid voltage. Rotor speed can be monitored in order to avoid rotor speed above a maximum allowed rotor speed. Temperature of the resistors can be monitored in order to avoid a temperature above a predetermined maximum temperature level.

According to a preferred embodiment of the inventive wind turbine the electronic switch may comprise a transistor. The transistor can easily be switched electronically, therefore any duty cycle can be chosen when the electronic switch is a transistor.

Preferably the permanent magnet generator and the generator converter of the inventive wind turbine are connected by preferably three phases, whereby a braking resistor is connected to each phase. Accordingly three switches are needed, one for each phase.

According to an alternative embodiment of the inventive wind turbine the electric switch can be a relay, which is connected such that the at least one braking resistor is cut-in when a power loss occurs. According to this embodiment the switch is a relay which is connected such that the resistors are cut-in if the relay is inactive. That way the resistors will automatically be cut-in when power is lost so that a braking force is exerted upon the rotor.

In the inventive wind turbine it may be envisaged that it comprises an electric switch and an electronic switch. This way the advantages of both switches can be achieved.

In the inventive wind turbine it is preferred that the at least one braking resistor is a power resistor.

The invention and its underlying principle will be better understood when consideration is given to the following detailed description of preferred embodiments.

In the accompanied drawings:
- fig. 1: is a schematic view of an inventive wind turbine;
- fig. 2: is a schematic view of another embodiment of an inventive wind turbine.

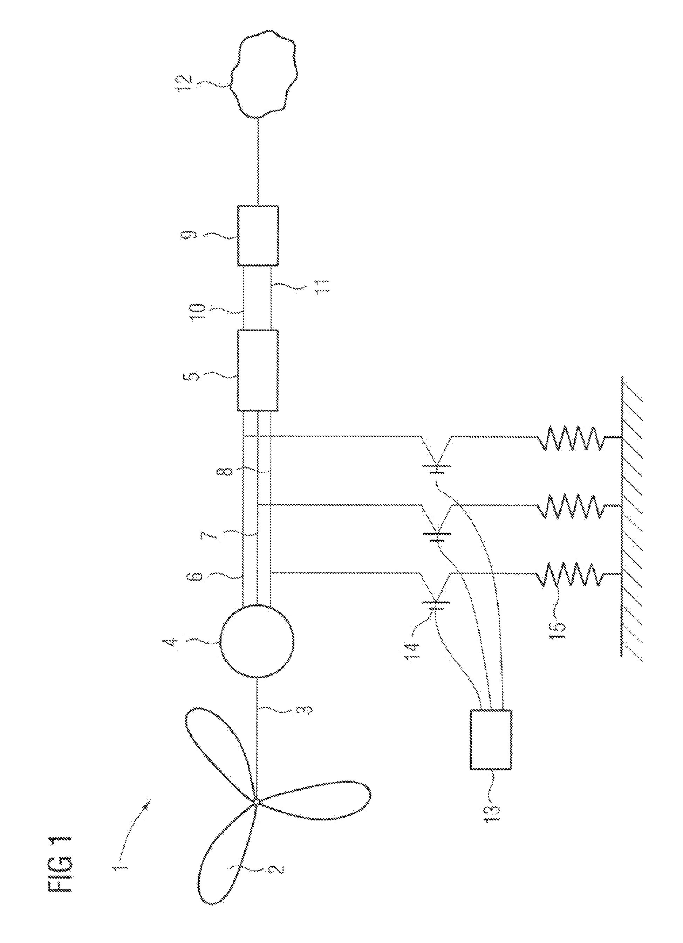

Fig. 1 is a schematic view of a wind turbine 1, comprising a rotor 2 with three rotor blades connected to a rotor shaft 3 and a permanent magnet generator 4. The permanent magnet generator 4 comprises a stator with a number of coils and a rotor with a number of permanent magnets, so that an electric voltage is induced when the rotor is turned.

The permanent magnet generator 4 is connected to a generator converter 5 by three phases 6, 7, 8. The generator converter 5 converts the alternating current which is produced by the permanent magnet generator 4 into direct current. A grid converter 9 is connected to the generator converter 5 by two lines 10, 11. The grid converter 9 converts the direct current which is generated by the generator converter 5 into alternating current with the appropriate frequency and voltage as required by a power grid 12.

When a grid drop occurs the generator torque, which normally acts upon the rotor shaft 3, is reduced dramatically so that the aerodynamic torque generated by the wind is larger, consequently the rotor 2 will accelerate.

A grid drop is monitored by a controller 13, which monitors e. g. the voltage of the power grid 12. When a grid drop has been detected the controller 13 switches an electronic switch so that a phase between permanent magnet generator 4 and generator converter 5 is connected to a resistor which brakes the permanent magnet generator 4. As can be seen in fig. 1 three phases 6, 7, 8 are present between permanent magnet generator 4 and generator converter 5. Through a switch 14, which is arranged between the permanent magnet generator and the generator converter, each phase can be connected to a resistor 15. When a phase of the permanent magnet generator 4 is connected to a resistor 15 a braking force acting upon the permanent magnet generator 4 is generated. In total three switches 14 are present, one switch 14 and one resistor 15 is allocated to each phase 6, 7, 8. Each switch 14 comprises a transistor or similar electronic switching device. The three switches 14 are controlled by a controller 13 which monitors rotor speed, temperature of the resistors 15, grid status and other operational parameters using a control algorithm. The controller 13 is configured such that the switches 14 are run according to an optimal duty cycle. The controller 13 which comprises a microprocessor calculates the optimal duty cycle with regard to structural loads on the wind turbine 1 and safety requirements. When the switches 14 are switched such that the permanent magnet generator 4 is connected to the resistors 15 a brake torque is generated which acts against the aerodynamic torque so that the effect of the grid drop is compensated for.

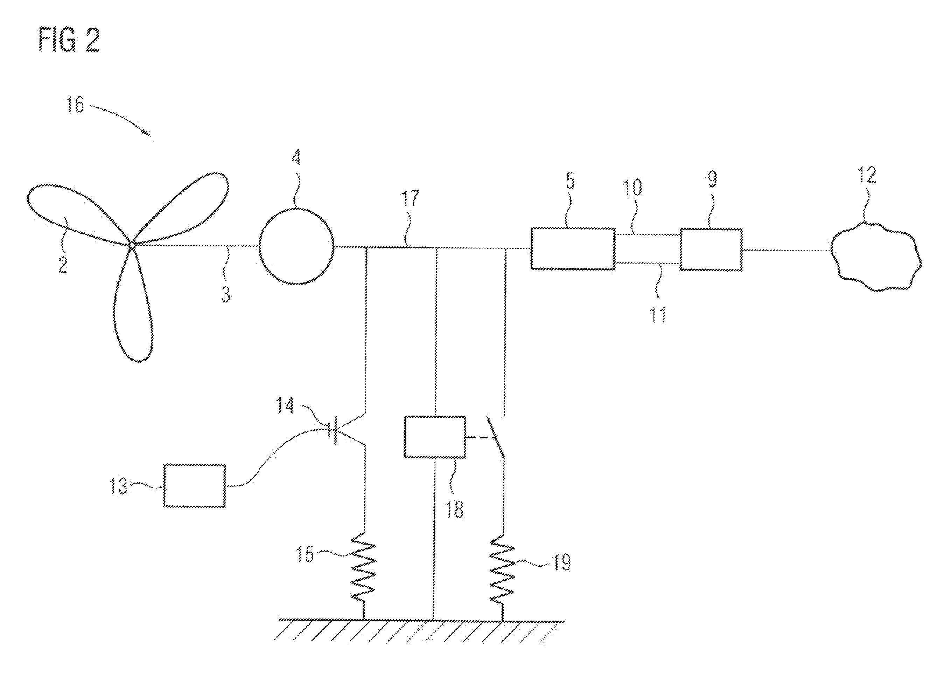

Fig. 2 shows another embodiment of the wind turbine 16, whereby for like components the same reference signs are used. A rotor 2 with rotor blades is connected via a rotor shaft 3 to a permanent magnet generator 4. The permanent magnet generator 4 is connected to a generator converter 5 which is further connected to a grid converter 9 which is connected to a power grid 12. Three phases are present between permanent magnet generator 4 and generator converter 5, of which only one phase 17 is depicted in fig. 2 for clarity reasons. In accordance with the first embodiment a controller 13 controls a switch 14 in the form of a transistor so that the permanent magnet generator 4 can selectively be connected to a resistor 15 in order to generate a braking torque during a grid drop. In addition a relay 18 is present as electric switch which is connected in parallel to the switch 14 such that a braking resistor 19 is cut-in when a power loss occurs. In the case of a total power loss the controller 13 will not work anymore, in this case the relay 18 switches automatically such that the resistor 19 will be automatically cut-in and connected to the phase 17 so that the resistor 19 is connected to the grid converter 4. Consequently even when a total power loss occurs the resistor 19 will generate a braking force which acts upon the permanent magnet generator 4 so that the rotor 2 can be controlled.

## Claims

1. A wind turbine (1, 16), comprising a rotor (2), a permanent magnet generator (4) and a generator converter (5), **characterised in that** an electric or electronic switch (14), which is arranged between the permanent magnet generator (4) and the generator converter (5), is provided for selectively connecting the permanent magnet generator (4) to at least one braking resistor (15, 19).

2. A wind turbine according to claim 1, **characterised in that** the electronic switch (14) is controlled by a controller (13).

3. A wind turbine according to claim 2, **characterised in that** the duty cycle of the electronic switch (14) is controlled by the controller (13).

4. A wind turbine according to claims 2 or 3, **characterised in that** a control algorithm is implemented in the controller (13), monitoring grid status and/or rotor speed and/or temperature of the resistors (15) and/or other operational parameters.

5. A wind turbine according to any of the preceding claims, **characterised in that** the electronic switch (14) comprises a transistor.

6. A wind turbine according to any of the preceding claims, **characterised in that** the permanent magnet generator (4) and the generator converter (5) are connected by preferably three phases, whereby a braking resistor (15) is connected to each phase.

7. A wind turbine according to any of the preceding claims, **characterised in that** the electric switch is a relay (18), which is connected such that the at least one braking resistor (19) is cut-in when a power loss occurs.

8. A wind turbine according to any of the preceding claims, **characterised in that** it comprises an electric switch and an electronic switch (14).

9. A wind turbine according to any of the preceding claims, **characterised in that** the at least one braking resistor (15, 19) is a power resistor.
